Europäisches Patentamt

European Patent Office

Office européen des brevets

(11) Veröffentlichungsnummer: **0 463 328 A2**

# EUROPÄISCHE PATENTANMELDUNG

(21) Anmeldenummer: **91107269.2**

(22) Anmeldetag: **04.05.91**

(51) Int. Cl.5: **B29C 51/26**, B29C 51/42, B29C 51/18

(30) Priorität: **16.06.90 DE 4019269**

(43) Veröffentlichungstag der Anmeldung:
**02.01.92 Patentblatt 92/01**

(84) Benannte Vertragsstaaten:
**AT BE CH DE DK ES FR GB GR IT LI LU NL SE**

(71) Anmelder: **HOESCH Metall + Kunststoffwerk GmbH & Co.**

**W-5166 Kreuzau-Schneidhausen(DE)**

(72) Erfinder: **Der Erfinder hat auf seine Nennung verzichtet**

(74) Vertreter: **Langmaack, Jürgen, Dipl.-Ing. et al Patentanwälte Maxton . Maxton . Langmaack Goltsteinstrasse 93 Postfach 51 08 06 W-5000 Köln 51(DE)**

(54) Verfahren zur Herstellung von Formkörpern aus thermoplastischen Kunststoffen durch Tiefziehen und Vorrichtung zur Durchführung des Verfahrens.

(57) Beim Tiefziehen von Formkörpern aus einer thermoplastisch verformbaren Kunststoffplatte, insbesondere zur Herstellung von Badewannen oder dergl. wurden die Kunststoffplatten bisher horizontal auf die Tiefziehform aufgelegt. Dies erfordert etweder eine aufwendige Heizeinrichtung an der Tiefziehvorrichtung oder die Bedienung durch zwei Arbeitskräfte, wenn vorgewärmte Kunststoffplatten aufgelegt werden.

Durch die Verwendung eines Wärmeofens (11), in dem die zu verformende Platten (8) hängend aufgeheizt werden und dann hängend der Tiefzieheinrichtung (4) zugeführt und in dieser Lage auch verformt werden, ergibt sich ein wesentlich schnelleres und kostengünstigeres Herstellungsverfahren.

*Fig. 1*

EP 0 463 328 A2

Die Erfindung betrifft ein Verfahren zur Herstellung von Formkörpern aus thermoplastisch verformbaren Kunststoffen, insbesondere Wannen, durch Tiefziehen einer erwärmten Kunststoffplatte in ein Formwerkzeug, das mit einer Einspannvorrichtung zum Einspannen der Kunststoffplatte in Verbindung steht.

Formkörper der eingangs bezeichneten Art, insbesondere Sanitärartikel wie Badewannen, Duschwannen oder dergl., werden in der Weise hergestellt, daß auf eine Tiefziehform die zu verformende Platte aus einem thermoplastisch verformbaren Kunststoff, beispielsweise einem Acryl-Kunststoff, horizontal liegend aufgespannt, über Heizstrahler auf die erforderliche Verformungstemperatur aufgeheizt und anschließend durch Anlegen eines Unterdrucks auf der Seite des Formwerkzeuges verformt wird. Da bei dieser Arbeitsweise die zu verformende Kunststoffplatte auf dem Formwerkzeug nach dem Einspannen aufgeheizt wird, muß hierbei die Heizeinrichtung sehr genau und feinfühlig geregelt werden, um zum einen eine Aufheizung auf die optimale Verformungstemperatur des Materials zu erreichen, zum anderen darf keine Überhitzung stattfinden, die das Material beschädigt. Es muß ferner dafür Sorge getragen werden, daß die Kunststoffplatte auch gleichmäßig durchgeheizt wird, um Rißbildungen im stark verformten Bereich zu verhindern. Wird die Kunststoffplatte horizontal liegend in einem Wärmeschrank aufgeheizt, dann vermeidet man zwar die Heizeinrichtung an der Maschine, benötigt aber zum Einlegen in die Maschine zwei Arbeitskräfte.

Der Erfindung liegt nun die Aufgabe zugrunde, das Verfahren der eingangs bezeichneten Art so umzugestalten und zu verbessern, daß eine kostengünstigere Herstellung bei gleichbleibender Qualität möglich ist.

Diese Aufgabe wird erfindungsgemäß dadurch gelöst, daß die zu verformende Kunststoffplatte an einer Seitenkante senkrecht hängend der senkrecht ausgerichteten Einspannungsebene des Formwerkzeugs zugeführt wird. Diese Verfahrensweise hat den Vorteil, daß die Handhabung der zu verformenden Kunststoffplatten einerseits und das Herausnehmen der fertigen Formkörper andererseits bei den hier in Betracht kommenden Abmessungen, wie beispielsweise normale Badewannen, Duschwannen oder dergl., von nur einer Person durchgeführt werden kann. Die senkrecht aufgehängte Kunststoffplatte kann dann ebenfalls in einfacher Weise von beiden Seiten gereinigt und auch auf Fehler kontrolliert werden, bevor sie in die senkrechte Einspannebene des Formwerkzeugs eingeführt wird, wobei Beschädigungen nach der Reinigung und Kontrolle praktisch ausgeschlossen sind.

In einer besonders vorteilhaften Ausgestaltung der Erfindung ist ferner vorgesehen, daß die zu verformende Kunststoffplatte zunächst auf Verarbeitungstemperatur aufgeheizt und dann erst dem Formwerkzeug hängend zugeführt wird. Besonders zweckmäßig ist es hierbei, wenn die zu verformende Kunststoffplatte hängend aufgeheizt wird. Diese Ausgestaltung des Verfahrens hat den Vorteil, daß die zu verformende Kunststoffplatte außerhalb des Formwerkzeuges aufgeheizt wird, beispielsweise in einem Wärmeofen, so daß hier die Wärmezufuhr von beiden Flächenseiten erfolgt und damit eine gleichmäßige Durchheizung des gesamten Plattenquerschnitts gewährleistet ist, bevor die aufgeheizte Kunststoffplatte dann dem Formwerkzeug zugeführt wird. Hieraus ergibt sich als weiterer Vorteil, daß lediglich das Formwerkzeug in der üblichen Weise auf Temperatur gebracht werden muß, während die sonst übliche Heizeinrichtung mit ihrer komplizierten Regelung vollständig entfallen kann.

In weiterer Ausgestaltung des erfindungsgemäßen Verfahrens ist vorgesehen, daß ein Vorrat von mehreren Kunststoffplatten auf Verarbeitungstemperatur gehalten wird. Diese Arbeitsweise hat den Vorteil, daß die Aufheizung der Kunststoffplatten sehr viel langsamer erfolgen kann, wobei über die thermostatische Regelung, beispielsweise in einem geschlossenen Wärmeofen, die Verarbeitungstemperatur praktisch genau eingehalten werden kann und dementsprechend eine Überhitzung des Materials mit Sicherheit ausgeschlossen ist. Die vollständige Durchwärmung des Materials ergibt hierbei eine verbesserte Verarbeitbarkeit.

Ein weiterer Vorteil dieser Verfahrensweise besteht darin, daß aus einem Wärmeofen mehrere Tiefziehvorrichtungen mit unterschiedlichen Formwerkzeugen bedient werden können. Da durch den Wegfall der komplizierten Heizeinrichtung an der Tiefziehvorrichtung selbst diese um einen erheblichen Kostenfaktor billiger ist, ergibt sich hiermit für eine Produktpalette mit mehreren gängigen Grundtypen die Möglichkeit, für die Grundtypen entsprechende Tiefziehvorrichtungen vorzuhalten, ohne hier das Formwerkzeug wechseln zu müssen. Damit entfallen die Rüstzeiten und zum anderen ergibt sich hier die Möglichkeit, auch schon geringe Stückzahlen praktisch auf Bestellung herzustellen. Beispielsweise bei der Herstellung von Bade- oder Duschwannen können die geformten Wannenrohlinge unmittelbar von der Tiefziehvorrichtung kommend weiterverarbeitet werden, d.g. gesäubert und mit der üblichen Außenbeschichtung aus glasfaserverstärktem Kunststoff versehen werden. Damit entfällt für derartige Grundtypen das Erfordernis einer ausreichenden Lagerhaltung der Wannenrohlinge.

Die Erfindung betrifft ferner eine Einrichtung zur Herstellung von Formkörpern aus thermoplastisch verformbaren Kunststoffen, insbesondere Wannen, durch Tiefziehen einer Kunststoffplatte mit wenigstens einem beheizbaren, mit einer Spannvorrichtung zum ebenen Aufspannen der zu verformenden Kunststoffplatte in Verbindung stehenden Formwerkzeug, insbesondere zur Durchführung des erfindungsgemäßen Verfahrens.

Gemäß der Erfindung ist hierbei vorgesehen, daß die Einspannebene des Formwerkzeugs vertikal ausgerichtet ist und daß eine Verfahrvorrichtung zum hängenden Transport der zu verformenden Kunststoffplatte in die Einspannebene vorgesehen ist, die mit lösbaren Haltemitteln versehen ist. Der Vorteil einer derart ausgebildeten Einrichtung besteht darin, daß die flach angelieferten Kunststoffplatten zunächst in die Verfahreinrichtung eingehängt werden, soweit nötig, gereinigt und auf Fehlerfreiheit der beispielsweise bei der Herstellung von Badewannen hochglänzenden Oberfläche kontrolliert werden können. Anschließend wird dann mit Hilfe der Verfahreinrichtung die zu verformende Kunststoffplatte vor das Formwerkzeug transportiert, eingespannt, aufgeheizt und tiefgezogen. Diese Arbeiten können von nur einer Bedienungsperson durchgeführt werden. Besonders zweckmäßig ist es hierbei, wenn die Verfahrvorrichtung im wesentlichen in Richung der Einspannebene des Formwerkzeugs bewegbar ist. Dies hat den Vorteil, daß bei einem horizontalen Verfahren die durchzuführenden Reinigungs- und Kontrollarbeiten bequem vorgenommen werden können, wobei ferner die Beleuchtung optimal für die Kontrolle der Fehlerfreiheit der Oberfläche eingerichtet werden kann. Der weitere Vorteil besteht darin, daß infolge der Zwangsführung durch die Verfahreinrichtung, anders als beim Auflegen von Hand, eine nachträgliche Beschädigung beim Einbringen in die Tiefzieheinrichtung nicht mehr möglich ist.

In besonders vorteilhafter Ausgestaltung der Erfindung ist vorgesehen, daß ein Wärmeofen für die zu verformende Kunststoffplatte vorgesehen ist, dessen Innenraum von der Verfahrvorrichtung befahrbar ist. Diese Anordnung hat den Vorteil, daß die Tiefzieheinrichtung ohne Heizeinrichtung ausgeführt werden kann und daß dann bei großvolumigen Wärmeöfen mehrere Platten auf Vorrat aufgeheizt werden können, wobei die Temperaturführung in einem geschlossenen Wärmeofen sehr viel präziser möglich ist, als bei einer unmittelbar mit der Tiefzieheinrichtung verbundenen Heizeinrichtung, bei der ein Teil der Platte mit der Umgebung der Werkhalle unmittelbar in Verbindung steht. Außerdem ist in einem Wärmeofen eine langsame und gleichmäßige Durchwärmung der zu verformenden Kunststoffplatte möglich.

In weiterer Ausgestaltung der Erfindung ist vorgesehen, daß die Verfahrvorrichtung ein zwischen Formwerkzeug und Wärmeofen verlaufendes, vorzugsweise schienenförmiges Führungselement und wenigstens zwei jeweils mit den lösbaren Haltemitteln versehene Fahrelemente aufweist und daß der Wärmeofen mehrere führende Halteelemente für die Fahrelemente aufweist, die wahlweise mit dem Führungselement verbindbar sind. Diese Ausgestaltung hat den Vorteil, daß das Führungselement der Verfahreinrichtung der Einspannebene des Formwerkzeugs fest zugeordnet werden kann, so hier eine präzise Einführung der Platte gewährleistet ist. Der Wärmeofen kann dann so groß ausgebildet werden, daß mehrere Platten auf Vorrat auf Verarbeitungstemperatur gehalten werden können, die bereits an den Fahrelementen aufgehängt sind und über entsprechende führende Halteelemente im Wärmeofen gehalten werden. Die aufgeheizte Platte wird dann jeweils aus dem Wärmeofen abgezogen, wobei die führenden Halteelemente im Wärmeofen mit dem feststehenden Führungselement über Weichen oder dergl. jeweils verbunden werden. In besonders einfacher Ausgestaltung ist hierbei vorgesehen, daß der Wärmeofen senkrecht zur Einspann- und Verfahrebene der Kunststoffplatten bewegbar ausgebildet ist. Diese Ausbildung ermöglicht nicht nur eine einfache Ankoppelung der einzelnen führenden Halteelemente im Wärmeofen an das jeweils einem Formwerkzeug zugeordnete Führungselement, wobei dann der Wärmeofen schrittweise entsprechend dem Abstand der führenden Halteelemente in seinem Innern weiterbewegt wird, sondern ermöglicht auch die Anlage einer Fertigungsstrasse, bei der mehrere Tiefzieheinrichtungen ohne Heizeinrichtung nebeneinander aufgestellt werden, so daß der Wärmeofen dann parallel zu der Linie der Tiefzieheinrichtung verfahren werden kann und mehrere Tiefzieheinrichtungen über nur einen Wärmeofen bedient werden können.

Die Erfindung wird anhand schematischer Zeichnungen eines Ausführungsbeispiels näher erläutert. Es zeigen:

Fig. 1    eine Seitenansicht einer Einrichtung zum Herstellen von Formkörpern aus thermoplastisch verformbaren Kunststoffplatten,

Fig. 2    eine Aufsicht auf die Einrichtung gem. Fig. 1.

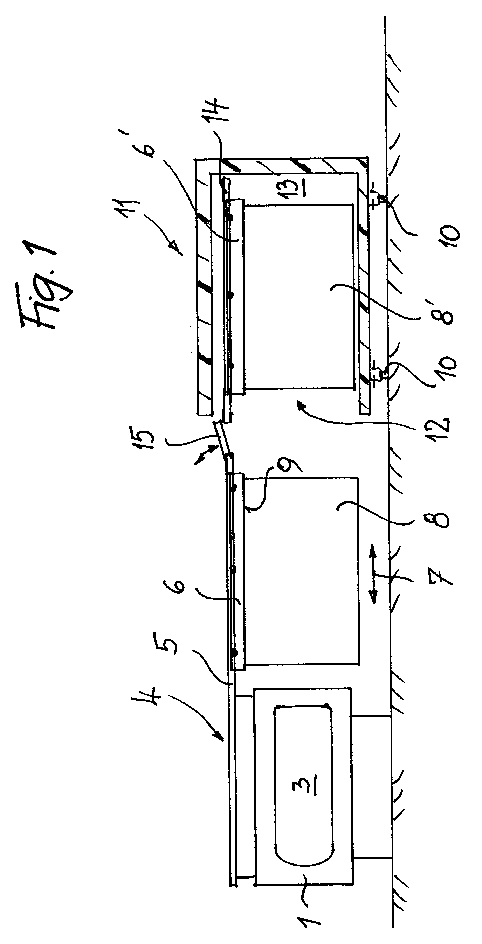

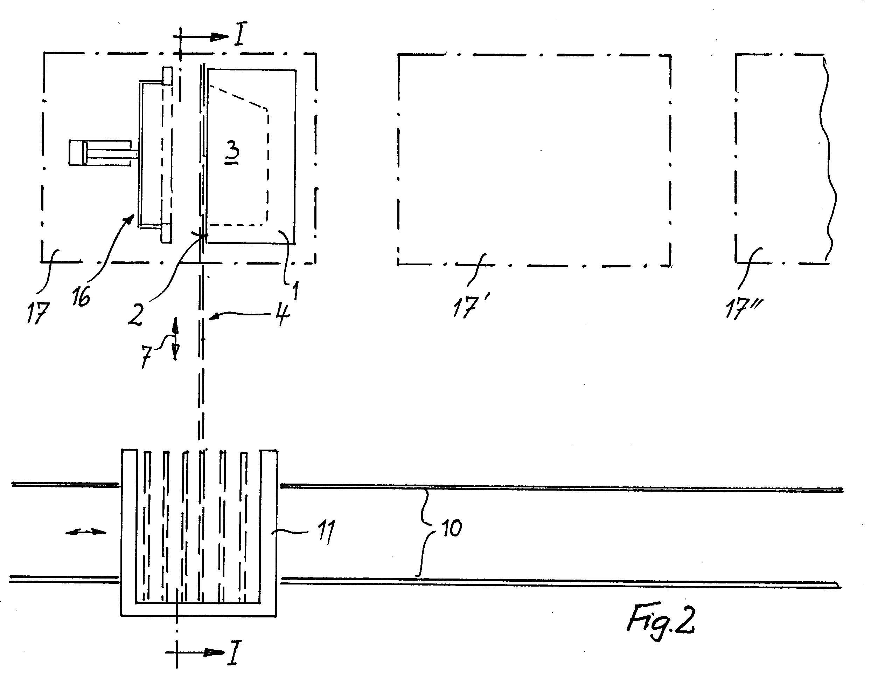

Fig. 1 zeigt in einer Seitenansicht eine Einrichtung zum Herstellen von Sanitärartikeln, beispielsweise Badewannen durch Tiefziehen von erwärmten Kunststoffplatten und zwar als Ansicht gegen die in Fig. 2 kenntlich gemachte Ebene I-I.

Die Einrichtung besteht aus einem heiz- und kühlbaren Formwerkzeug 1 üblicher Bauart, das hier in seinem Aufbau und seiner Funktionsweise zum Stande der Technik gehört und daher nicht näher zu beschreiben ist. Entgegen der normalen Anordnung ist dieses Formwerkzeug jedoch so aufgestellt, daß seine Einspannebene 2 (vgl. Fig. 2) vertikal ausgerichtet ist, so daß die Formmulde 3 gegen den Betrachter gerichtet ist. Dem Formwerkzeug 1 ist eine Verfahreinrichtung 4 zugeordnet, die im wesentlichen aus einem schienenförmigen Führungselement 5 besteht, das der im wesentlichen durch das Formwerkzeug 1 definierten Tiefzieheinrichtung fest zugerodnet ist. An dem Führungselement 5 ist ein Fahrelement 6 in Richtung des Pfeiles 7 verschiebbar angeordnet, das hier mit nicht näher dargestellten Haltemitteln versehen ist, über die eine zu verformende Kunststoffplatte 8 an einer obenliegenden Seitenkante 9 hängend befestigbar ist. Dieses Haltemittel kann beispielsweise durch eine federbelastete Klemmvorrichtung gebildet werden.

Neben dem Formwerkzeug 1, auf Schienen 10 verfahr- und arretierbar, ist ein Wärmeofen 11 angeordnet, dessen seitliche, mit einer hier nicht näher dargestellten öffenbaren Abdeckung versehene Öffnung 12 dem Formwerkzeug zugekehrt ist. Im Innenraum 13 des Wärmeofens 11 sind im Deckenbereich parallel nebeneinander mehrere schienenförmige Halteelemente 14 angeordnet, die jeweils über eine mit dem schienenförmigen Führungselement 5 verbundene verschwenkbare Übergangsweiche 15 verbindbar sind.

In den Wärmeofen 11 sind nun jeweils an den Fahrelementen 6' aufgehängte und von den schienenförmigen Halteelementen 14 gehaltene Kunststoffplatten 8 eingeschoben, die in einer im wesentlichen konstanten Ofenatmosphäre aufgeheizt und auf Verarbeitungstemperatur gehalten werden. Der Wärmeofen 11 wird dann jeweils mit der gerade zu verarbeitenden, aufgewärmten Kunststoffplatte in bezug auf die Einspannebene 2 des Formwerkzeuges 1 so verfahren, daß die Übergangsweiche 15 mit dem schienenförmigen Halteelement 14 verbunden werden kann und die betreffende Kunststoffplatte aus dem Wärmeofen heraus bis vor die Formmulde 3 des Formwerkzeugs 1 verfahren werden kann. Sobald die aufgewärmte Kunststoffplatte vor dem Formwerkzeug positioniert ist, wird sie über eine beispielsweise hydraulisch betätigbare Spanneinrichtung 16 gegen das Formwerkzeug 1 verspannt, das von der Formmulde 3 her mit Unterdruck beaufschlagt wird, so daß die aufgeheizte Kunststoffplatte in die Formmulde eingezogen wird. Die im wesentlichen durch Formmulde 3 und Spannwerkzeug 16 gebildete Tiefzieheinrichtung 17 weist keinerlei Heizeinrichtung auf, sondern ist lediglich in üblicher Weise mit einer Kühleinrichtung, beispielsweise in Form mehrerer, hier nicht näher dargestellter Kaltluftdüsen versehen, die den fertigen Formkörper kühlen, der anschließend nach dem Öffnen der Spanneinrichtung aus dem Formwerkzeug herausgenommen werden kann.

Da nach dem Anlegen der Spanneinrichtung 16 die Kunststoffplatte 8 vom Fahrelement 6 gelöst werden kann, hat nun während des Tiefziehens und anschließenden Abkühlens das Bedienungspersonal die Möglichkeit, in das frei gewordene Fahrelement 6 eine neue Kunststoffplatte einzuhängen, die, falls notwendig, gesäubert und auf Fehlerfreiheit untersucht werden kann und anschließend dann zum Aufheizen an die frei gewordene Stelle in den Wärmeofen eingeschoben werden kann. Da für das Tiefziehen und den anschließenden Kühlvorgang einige Zeit benötigt wird, ist für das Einsetzen einer neuen Kunststoffplatte ausreichend Zeit vorhanden. Sobald die neue Kunststoffplatte in den Wärmeofen 11 eingeschoben ist, kann dann die Spanneinrichtung 16 geöffnet und der fertige Formartikel aus dem Formwerkzeug 1 herausgenommen und abgesetzt werden.

Sowohl vom Gewicht als auch von der Größe her können normal große Kunststoffbadewannen von nur einer Person gehandhabt werden, so daß nach diesem Verfahren eine Tiefzieheinrichtung von nur einer Person bedient werden kann. Sobald der fertigen Formkörper aus dem Formwerkzeug herausgenommen ist, wird der Wärmeofen 11 um den durch die schienenförmigen Halteelemente 14 vorgegebenen Abstand senkrecht zur Einspannebene 2 verschoben, so daß dann eine neue, auf Betriebstemperatur aufgeheizte Kunststoffplatte vor das Formwerkzeug 1 verfahren, festgespannt und tiefgezogen werden kann.

## Patentansprüche

1. Verfahren zur Herstellung von Formkörpern aus thermoplatisch verformbaren Kunststoffen, insbesondere Sanitärartikel wie Badewannen, Duschwannen oder dergl., durch Tiefziehen einer erwärmten Kunststoffplatte in ein Formwerkzeug, das mit einer Einspannvorrichtung zum Einspannen der Kunststoffplatten in Verbindung steht, **dadurch gekennzeichnet,** daß die zu verformende Kunststoffplatte an einer Seitenkante senkrecht hängend der senkrecht ausgerichteten Einspannebene des Formwerkzeugs zugeführt wird,

2. Verfahren nach Anspruch 1, dadurch gekennzeichnet, daß die zu verformende Kunststoffplatte zunächst auf Verarbeitungstemperatur aufgeheizt und dann erst dem Formwerkzeug hängend zugeführt wird.

3. Verfahren nach Anspruch 1 oder 2, dadurch gekennzeichnet, daß die zu verformende Kunststoffplatte hängend aufgeheizt wird.

4. Verfahren nach einem der Ansprüche 1 bis 3, dadurch gekennzeichnet, daß ein Vorrat mehrerer Kunststoffplatten hängend auf Verarbeitungstemepratur gehalten wird.

5. Einrichtung zur Herstellung von Formkörpern aus thermoplastisch verformbaren Kunststoffen, insbesondere Wannen, durch Tiefziehen einer Kunststoffplatte mit wenigstens einem beheizbaren, mit einer Spannvorrichtung zum ebenen Aufspannen der zu verformenden Kunststoffplatte in Verbindung stehenden Formwerkzeug, insbesondere zur Durchführung des Verfahrens nach den Ansprüchen 1 bis 4, dadurch gekennzeichnet, daß die Einspannebene (2) des Formwerkzeugs (1) vertikal ausgerichtet ist und daß eine Verfahrvorrichtung (4) zum hängenden Transport der zu verformenden Kunststoffplatte (8) in die Einspannebene (2) vorgesehen ist, die mit lösbaren Haltemitteln versehen ist.

6. Vorrichtung nach Anspruch 5, dadurch gekennzeichnet, daß die Verfahrvorrichtung (4) im wesentlichen in Richtung der Einspannebene (2) des Formwerkzeugs (1) bewegbar ausgebildet ist.

7. Vorrichtung nach Anspruch 5 oder 6, dadurch gekennzeichnet, daß ein Wärmeofen (11) für die zu verformenden Kunststoffplatten (8) vorgesehen ist, dessen Innenraum (13) über die Verfahrvorrichtung (4) befahrbar ist.

8. Einrichtung nach einem der Ansprüche 5 bis 7, dadurch gekennzeichnet, daß die Verfahrvorrichtung (4) ein zwischen Formwerkzeug (1) und Wärmeofen (11) verlaufendes, vorzugsweise schienenförmiges Führungselement (5) und wenigstens zwei jeweils mit den lösbaren Haltemitteln versehene Fahrelemente (6) aufweist und daß der Wärmeofen (11) mehrere schienenförmige Halteelemente (14) für die Fahrelemente (6) aufweist, die wahlweise mit dem Führungselement (5) verbindbar sind.

9. Einrichtung nach einem der Ansprüche 5 bis 8, dadurch gekennzeichnet, daß der Wärmeofen (11) senkrecht zur Einspann- und Verfahrebene (2) der Kunststoffplatte (8) bewegbar ausgebildet ist.

Fig. 1

EP 0 463 328 A2

Fig.2

EP 0 463 328 A2